# EUROPÄISCHE PATENTANMELDUNG

(11) **EP 4 230 477 A1**
(43) Veröffentlichungstag der Anmeldung: **23.08.2023**
(21) Anmeldenummer: 22158077.2
(22) Anmeldetag: 22.02.2022
(51) Int. Cl.: B60P 3/34, B60S 9/12

(54) **VERFAHREN ZUR STABILISIERUNG EINES FAHRZEUGS IN ART EINES REISEMOBILS ODER CARAVANS BEI WIND, FAHRZEUG IN ART EINES REISEMOBILS ODER EINES CARAVANS UND HYDRAULIKSYSTEM HIERFÜR**

(71) Anmelder: STS Industries B.V., 2153 GE Nieuw-Vennep (NL)
(72) Erfinder: Blom, Pierre, 2153GE Nieuw-Vennep (NL); Helmling, Markus, 89160 Dornstadt (DE)
(74) Vertreter: Witte, Weller und Partner Patentanwälte mbB Stuttgart

(57) **Zusammenfassung**

Bekannt sind Reisemobile und Caravan-Anhänger, die über Stützsysteme mit einer Mehrzahl von Bodenstützen verfügen. Diese Bodenstützen gewährleisten die Stabilität des Fahrzeugs bei Wind.

Für Situationen starken oder böigen Windes wird ein Verfahren zur Stabilisierung insbesondere einessolchen Fahrzeugs (10) mit Bodenstützen (22A-22D) vorgeschlagen. Das Verfahren siehtvor, dass mittels Sensoren (42A-42D, 44A-44D, 46A, 46B) des Fahrzeugs (10) eine Windsituation erfasst wird.

Das Verfahren sieht weiterhin vor, dass in Reaktion auf die erfasste Windsituation mindestens eine der Bodenstützen (22A-22D) ausgefahren oder eingefahren wird.

## Beschreibung

### ANWENDUNGSGEBIET UND STAND DER TECHNIK

Die Erfindung betrifft den Bereich der Wohnmobile und Caravan-Anhänger. Zweckbedingt weisen solche Fahrzeuge üblicherweise große Seitenflächen mit einem hohen Luftwiderstandsbeiwert auf. Entsprechend sind derartige Fahrzeuge bedroht, durch starken Wind mit einem hohen Kippmoment beaufschlagt zu werden.

Um das Kippen von solchen Fahrzeugen bei Wind zu verhindern und um die Fahrzeuge im Stand zu sichern, ist es üblich, die Fahrzeuge mit ausfahrbaren Bodenstützen auszustatten, meist mit vier Bodenstützen. Ist das Fahrzeug an seinem Zielort angekommen, beispielsweise auf einem Campingplatz, so werden diese Bodenstützen ausgefahren, so dass sie das Fahrzeug auf dem Boden abstützen und einen Teil der Gewichtskraft des Fahrzeugs aufnehmen. Solche Bodenstützen führen bei Wind zu einem festeren Stand. Sie wirken meist aufgrund ihrer Anordnung am Fahrzeug vorteilhaft gegen eine Kippbewegung des Fahrzeugs, da sie weit außenliegende Kippachsen definieren.

Dennoch verbleibt eine relevante Gefahr, dass bei Wind Fahrzeuge der genannten Art kippen.

### AUFGABE UND LÖSUNG

Aufgabe der Erfindung ist es, die Kippneigung gattungsgemäßer Fahrzeuge bei Wind zu verringern.

Hierfür wird erfindungsgemäß primär ein Betriebsverfahren für ein Fahrzeugs mit Hydrauliksystem vorgeschlagen, welches der Stabilisierung des Fahrzeugs bei Wind bzw. die Erkennung des entsprechenden Bedarfs dient. Auch das Hydrauliksystem und das Fahrzeug in seiner Gesamtheit sind von der Erfindung umfasst.

Ein Reisemobil oder ein Caravan-Anhänger erfindungsgemäßer Art und zur Durchführung des erfindungsgemäßen Betriebsverfahrens weist ein Stützensystem mit einer Mehrzahl von hydraulisch Bodenstützen auf, vorzugweise vier Bodenstützen, die translativ oder schwenkbar ausgefahren werden können. Die Bodenstützen sind jeweils von einem Hydraulikaktor betätigbar, insbesondere vorzugsweise von einem Hydraulikzylinder, der von einer Hydraulikpumpe mit druckbeaufschlagter Hydraulikflüssigkeit versorgt wird.

Zusätzlich oder alternativ zum Stützensystem kann das Fahrzeug einen ausfahrbaren Slide-Out-Kasten aufweisen, also einen ausfahrbaren Erker, der zum Zwecke der Vergrößerung des Innenraums ausgefahren wird. Auch dieser ist mittels mindestens einem Hydraulikaktor ausfahrbar, insbesondere in Art eines Hydraulikzylinders.

Vorzugsweise ist das Hydrauliksystem mit einer oder mehreren Hydraulikpumpen ausgerüstet, die die Hydraulikaktoren des Stützensystems und/oder des Slide-out-Systems mit Hydraulikzylinder speisen. Die mindestens eine Hydraulikpumpe sowie Hydraulikventile sind vorzugsweise Teil einer gemeinsamen zentralen Hydraulikeinheit.

Zur Steuerung des Hydrauliksystems ist vorzugsweise ein Steuergerät vorgesehen, welches die Hydraulikpumpen sowie die Hydraulikventile steuert. Sofern ein Stützsystem vorgesehen ist, sind vorzugsweise alle Bodenstützen einzeln ansteuerbar.

Die Steuerung des Hydrauliksystems erfolgt erfindungsgemäß in Abhängigkeit einer Windsituation, also in Abhängigkeit der aktuell auf das Fahrzeug wirkenden Windkräfte. Zur Erfassung der Windsituation sind am Fahrzeug Sensoren vorgesehen. Dabei sind verschiedene Sensoren und Kombinationen von Sensoren verwendbar. Beispielsweise kann das Fahrzeug über eine Ultraschallsensorik verfügen, mittels derer Windrichtung und Windgeschwindigkeit erfassbar sind. Weitere demgegenüber bevorzugte Sensoren werden im Weiteren erläutert.

Vorzugsweise verfügt das Steuergerät über Zugriff auf ein externes Netzwerk, insbesondere auf das Internet, um Wetterdaten zu erfassen. Insbesondere werden Winddaten zum aktuellen Standortdes Fahrzeugs erfasst.

Mittels Sensordaten und ggf. zusätzlich mittels Wetterdaten wird zumindest das Vorhandensein von Wind ermittelt. Vorzugsweise werden auch eine mittlere Windgeschwindigkeit und eine mittlere Windrichtung des Windes ermittelt.

Auf Basis dieser Winddaten erfolgt eine Auswertung. Diese Auswertung umfasst eine Bewertung, ob das Einfahren oder Ausfahren der Bodenstützen und/oder das Einfahren des Slide-Out-Kastens geboten ist.

In Hinblick auf die Bodenstützen kann deren Einfahren oder Ausfahren zweckmäßig sein. Üblicherweise erfolgt das Ausfahren ausgehend von einer Situation, in der die Bodenstützen bereits ausgefahren sind, da das Fahrzeug an einem Ort fest aufgestellt und mittels der Bodenstützen nivelliert ist. Das erfindungsgemäße Verfahren kann jedoch auch ausgehend von einem ruhenden Fahrzeug ohne ausgefahrene Bodenstützen durchgeführt werden, also aus einem Zustand, in dem das Gesamtgewicht des Fahrzeugs auf den Reifen ruht.

Insbesondere ist es zweckmäßig, wenn im Zuge des erfindungsgemäßen Verfahrens durch weiteres Ausfahren der leeseitigen Bodenstützen oder durch partielles oder vollständiges Einfahren der luvseitigen Bodenstützen das Fahrzeug gegen den Wind gekippt wird. Hierdurch wird der Schwerpunkt weiter von der leeseitigen Kippachse beabstandet. Die Gefahr eines Kippens des Fahrzeugs wird hierdurch verringert. Alternativ ist es auch möglich, die leeseitigen Bodenstützen und die luvseitigen Bodenstützen jeweils auszufahren, wobei die leeseitigen Bodenstützen in stärkerem Maße ausgefahren werden. Auch hierdurch wird die beabsichtigte Vergrößerung des Abstandes zwischen der leeseitigen Kippachse und dem Fahrzeugschwerpunkt vergrößert.

Wie weit die Bodenstützen eingefahren bzw. ausgefahren werden, hängt vorzugsweise von der ermittelten mittleren Windgeschwindigkeit ab und bezieht insbesondere vorzugweise weitere Parameter mit ein, die als Basisdaten fest im Steuergerät hinterlegt sind oder zuvor durch Sensoren des Fahrzeugs erfasst wurden. Grundsätzlich ist durch die Schwerpunktverlagerung anzustreben, dass die Windsituation einschließlich möglicher Böen kein windbedingtes Kippmoment auf das Fahrzeug ausübt, welches größer als das durch die Gewichtskraft und den Schwenkpunkt bedingte Moment um die leeseitige Kippachse.

Üblicherweise weisen Stützsysteme vier Bodenstützen auf, von denen jeweils zwei rechtsseitig und zwei linksseitig am Fahrzeug vorgesehen sind. Dabei ist üblicherweise der Abstand der auf einer Seite angeordneten Bodenstützen in Fahrzeuglängsrichtung deutlich größer als der Abstand der links- und rechtsseitigen Bodenstützen voneinander. Entsprechend ist die Gefahr eines seitlichen Kippens des Fahrzeugs üblicherweise wesentlich größer als die Gefahr eines Kippens über eine vordere oder hintere Kippachse.

Es ist daher üblicherweise ausreichend, wenn die beiden leeseitigen Bodenstützten in gleichem Maße ausgefahren werden und/oder die beiden luvseitigen Bodenstützen in gleichem Maße eingefahren werden bzw. gleichmäßig in geringem Maße als die leeseitigen Bodenstützen ausgefahren werden, abhängig davon, von welcher Seite der Wind in höherem Maße gegen das Fahrzeug weht.

Alternativ ist es jedoch auch möglich, die Bodenstützen auf jeweils einer Seite in unterschiedlichem Maß auszufahren oder einzufahren. So können beispielsweise bei von hinten oder schräg hinten kommendem Wind die dortigen luvseitigen Bodenstützen partiell eingefahren werden und/oder die vorderen leeseitigen Bodenstützen partiell ausgefahren werden.

Das Kippen des Fahrzeugs in den Wind mittels des Stützensystems ist nicht die einzige denkbare Maßnahme.

Vorzugsweise ist eine noch zuvor stattfindende Reaktion auf die Erfassung ansteigenden Windes vorgesehen, im Zuge derer alle Bodenstützen ausreichend weit ausgefahren werden, dass die Reifen des Fahrzeugs nur noch einen geringen Gewichtsanteil von vorzugsweise weniger als 5% der Gesamtmasse des Fahrzeugs tragen. Insbesondere vorzugsweise werden die Reifen im Rahmen dieser Reaktion sogar vollständig angehoben, so dass sie keinen Bodenkontakt mehr haben.

Durch ein solches Anheben des Fahrzeugs als Ganzem wird bereits eine vorteilhafte Situation zur Aufnahme von Windkräften geschaffen, da die Bodenstützen üblicherweise weiter außenliegende Kippachsen als die Bereifung des Fahrzeugs definieren. Zudem ist dadurch, dass die Lastdann quasi vollständig auf den Bodenstützen ruht, ein starrer Stand des Fahrzeugs erreicht, der bei mittelstarkem Wind gut zur Aufnahme der Windkräfte geeignet ist und insbesondere für Personen im Fahrzeuginnenraum angenehmer ist.

Sofern der Wind stärker wird, schließt sich das initiale Anheben des Fahrzeugs vorzugweise oben beschriebenes Kippen des Fahrzeugs und seines Schwerpunktes in den Wind an.

Eine weitere Maßnahme, die in Hinblick auf die Hydraulikaktoren des Stützensystems vorgesehen sein kann, ist das zumindest partielle Öffnen eines Hydraulikventils in Reaktion auf die erfasste Windsituation. Dieses Hydraulikventil verbindet mindestens einen Hydraulikzylinder mit einem Hydrospeicher wie einem Kolbenspeicher oder einem Membranspeicher. Hierdurch lassen sich Druckstöße in Folge von Windböen dämpfen, insbesondere um ein Aufschaukeln des Fahrzeugs im Wind zu verhindern.

In Situationen mit sehr starkem und insbesondere sehr böigem Wind ist es möglich, dass die Bodenstützen die Gefahr nicht verringern. Insbesondere stark wechselnde Windrichtungen können bewirken, dass das Kippen des Fahrzeugs in den Wind sich bei umkehrendem Wind als nachteilig herausstellt. Es kann zweckmäßig sein, in einer solchen Situation die Bodenstützen partiell oder vollständig eingefahren, so dass die Reifen des Fahrzeugs einen Gewichtsanteil von mindestens 50% einer Gesamtmasse des Fahrzeugs tragen und wobei die Bodenstützen vorzugsweise keinen Bodenkontakt mehr aufweisen. Das Einfahren der Bodenstützen kann damit einhergehen, dass die Gefahr für Menschen im Innenraum steigt. Ist dies zu befürchten, so wird vorzugsweise eine Warnmitteilung erzeugt, um Menschen im Fahrzeug zur Evakuierung aufzufordern.

Die beschriebenen Maßnahmen betreffend das windbedingte Ausfahren und/oder Einfahren der Bodenstützen werden vorzugsweise in Abhängigkeit von Windparametern getroffen. Das Steuergerät eines erfindungsgemäßen Hydrauliksystems ist vorzugsweise für die Bewertung der Windsituation auf Basis von Sensordaten und/oder Wetterdaten aus dem Internet ausgebildet, um die jeweils passende Maßnahme auszuwählen.

Mit steigender Windstärke und/oder stärker werdenden Böen erfolgen die Maßnahmen soweit vom Steuergerät vorgesehen vorzugsweise entsprechend der nachfolgenden Eskalationsstufen: Ausfahren aller Bodenstützen, Verlagerung des Schwerpunktes gegen den Wind, Dämpfung mittels Hydrospeicher, Einfahren der Bodenstützen.

Das Einfahren des Slide-Out-Kastens bei Wind ist üblicherweise zweckmäßig, sofern der Innenraum nicht genutzt wird und der zusätzlich durch den Slide-Out-Kasten bereitgestellte Innenraum nicht benötigt wird.

Da das Einfahren des Slide-Out-Kastens nicht unerwartet bzw. ohne menschliche Zustimmung erfolgen sollte, ist vorzugsweise vorgesehen, dass dem Einfahren des Slide-Out-Kastens in Reaktion auf die erfasste Windsituation eine Signalisierung vorweggeht, beispielsweise ein Warnton. Üblicherweise sollte jedoch vorgesehen sein, dass nach Ermittlung des Einfahrbedarfs des Slide-Out-Kastens zunächst eine Signalisierung über einen Lautsprecher abgegeben wird oder eine Nachricht beispielsweise auf einem Bediengerät oder einem Smartphone ausgegeben wird, die eine externe Bestätigung eines Menschen erfordert, um die Bewegung des Slide-Out-Kastens zu starten.

Im Falle der Bodenstützen ist vorzugsweise auch eine Signalisierung am Fahrzeug oder auf einem externen Gerät wie einem Smartphone vorgesehen, bevor die Bodenstützen ausfahren oder einfahren. Allerdings wird es bei den Bodenstützen als vorteilhaft angesehen, dass es keine externe Bestätigung benötigt.

Wie bereits erläutert, weist ein erfindungsgemäßes Hydrauliksystem Sensoren auf, um die Windsituation zu erfassen. Ein möglicher Sensortyp in ein Beschleunigungs- und/oder Lagesensor. Ein solcher Sensor kann genutzt werden, um mit Windsituationen einhergehende Erschütterungen zu detektieren. Vorzugsweise ist vorgesehen, dass in Abhängigkeit der Stärke und der Wiederholungen Erschütterungen dahingehend ausgewertet werden, dass eine Windsituation gegeben ist.

Grundsätzlich ist es auch möglich Beschleunigungs- und/oder Lagesensor zu verwenden, um einen windbedingten Kippwinkel des Fahrzeugs zu erfassen. Da ein solcher Kippwinkel jedoch erst erfassbar ist, wenn das Fahrzeug bereits leicht kippt, ist die Ermittlung einer mittleren Windstärke oder Windrichtung auf Basis eines Beschleunigungs- und/oder Lagesensors zur rechtzeitigen Auswahl einer Reaktion schwierig.

Grundsätzlich hat sich gezeigt, dass sich windbedingte Erschütterungen insbesondere dadurch gut mit Beschleunigungs- und/oder Lagesensoren identifizieren lassen, wenn mehrere Beschleunigungs- und/oder Lagesensoren vorgesehen sind. Vorzugsweise sind diese in Fahrzeuglängsrichtung zueinander beabstandet, insbesondere vorzugsweise um mindestens 2 Meter beabstandet. Erfassen die mehr als zwei Sensoren gleichzeitig in etwa gleichstarke Erschütterungen, so stellt dies ein Indiz für eine Windsituation dar, die eine Reaktion erfindungsgemäßer Art erfordern kann.

Alternative bzw. vorzugsweise zusätzliche Sensoren werden durch Lastsensoren zur Erfassung einer auf mindestens eine Bodenstütze wirkenden Kraft gebildet. Hierbei handelt es sich um Sensoren, die jeweils einer Bodenstütze zugeordnet sind und die auf diese Bodenstütze wirkende Kraft erfassen können. Vorzugweise ist jeder Bodenstütze ein Lastsensor zugeordnet.

Derartige Lastsensoren können neben dem erfindungsgemäßen Zweck auch weiteren Zwecken dienen, beispielsweise Teil einer Wiegefunktion sein.

Die Lastsensoren können unmittelbar an der Bodenstütze vorgesehen sein, beispielsweise in Form von Dehnungsmessstreifen oder anderweitiger Sensoren, die unmittelbar die auf die Bodenstütze wirkende Kraft oder eine damit zusammenhängende Größe erfassen. Auch Drucksensoren an den Bodenstützen stellen nutzbare Kraftsensoren dar.

Eine besondere Form von Sensoren zur Erfassung der Last sind Lastsensoren in Form hydraulischer Drucksensoren, die den Druck in einem der Bodenstütze zugeordneten Hydraulikzylinder oder an einem hiermit hydraulisch verbundenen Ort erfassen. Vorzugsweise sind diese Drucksensoren nicht unmittelbar an der Bodenstütze vorgesehen, sondern beabstandet hierzu als Teil einer zentralen Hydraulikeinheit, die auch die Hydraulikpumpe umfasst. Es kann jeweils ein hydraulischer Drucksensor je Bodenstütze vorgesehen sein. Es kann jedoch auch ein einzelner zentraler hydraulischer Drucksensor Verwendung finden, der wechselnd mit den Hydraulikzylindern der Bodenstütze hydraulisch verbunden wird.

Im Kontext der vorliegenden Erfindung liegt die Aufgabe der Lastsensoren insbesondere darin, windbedingte Laständerungen an den Bodenstützen zu registrieren. Aus der an den Bodenstützen anliegenden Last und insbesondere an dem hydraulischen Druck ihrer Hydraulikzylinder lässt sich die Stärke des Windes und auch die Windrichtung ermitteln. Auf der Luv-Seite bewirkt das vom Wind verursachte Kippmoment eine Reduzierung der Last und auf der Lee-Seite verursacht der Wind eine Erhöhung der Last.

Die Lastsensoren können phasenweise deaktiviert sein, um Strom zu sparen. Es ist von Vorteil, wenn die Lastsensoren, insbesondere wenn sie als hydraulischer Drucksensor ausgebildet sind, nicht dauerhaft aktiviert sind, sondern aktiviert werden, wenn das Vorhandensein von Wind bereits ermittelt wurde oder auf Basis bestehender Informationen wahrscheinlich erscheint. Insbesondere kann der bereits beschriebene Beschleunigungs- und/oder Lagesensor bzw. die Mehrzahl solcher Sensoren verwendet werden, um eine wahrscheinliche Windphase zu identifizieren, beispielsweise wenn innerhalb von weniger als 10 Minuten mindestens drei Erschütterungen mit einer Erschütterungsdauer von wenigstens 1 Sekunde wahrgenommen wurden. Alternativ oder zusätzlich können auch über das Internet bezogene Wetterdaten herangezogen werden, um eine wahrscheinliche Windphase zu erkennen.

Die Lastsensoren können in Reaktion auf die Ermittlung der wahrscheinlichen Windphase aktiviert werden, um zu verifizieren, ob Wind vorhanden ist und/oder um Details in Hinblick auf die Windgeschwindigkeit und/oder die Windrichtung zu erfassen. Vorzugsweise werden die Lastsensoren zyklisch aktiviert und deaktiviert, um Strom zu sparen und zur in voneinander zeitlich beabstandeten Messphasen Sensordaten zu liefern.

Damit der Windeinfluss auf die Lastsensoren beurteilt werden kann, werden die Sensordaten der Lastsensoren oder hieraus abgeleitete Werte vorzugsweise im Zuge der Erfassung und Auswertung der Windsituation mit Basisdaten verglichen.

Bei diesen Basisdaten kann es sich um Messdaten der Lastsensoren handeln, diezu einem oder mehreren früheren Zeitpunkten erfasst wurden, um Referenzwerte zu bilden. So kann beispielsweise in einem auf Basis der Sensordaten des Beschleunigungs- und/oder Lagesensors ermittelten windstillen oder windarmen Moment die Last an allen Bodenstützen ermittelt werden.

Alternativ oder zusätzlich können entsprechende Basisdaten auch fest im Steuergerät hinterlegt sein und fahrzeugtypspezifisch bereitgestellt werden. So kann beispielsweise in einem Speicher des Steuergeräts die Lage des Schwerpunktes des Fahrzeugs ohne Beladung fest hinterlegt sein, so dass auf Basis dessen die Last an allen Bodenstützen bei Windstille errechnet werden kann.

Da allerdings auch die dynamische Fahrzeugbeladung für die Lage des Schwerpunktes eine Rolle spielt, ist die Ermittlung des Schwerpunktes ausgehend von den Sensordaten der Lastsensoren bei Windstille fest hinterlegten Basisdaten im Steuergerät vorzuziehen.

Neben dem Betriebsverfahren betrifft die Erfindung ein hierfür geeignetes Hydrauliksystem für ein Fahrzeug in Art eines Reisemobils oder eines Caravans sowie das Fahrzeug selbst.

Das Fahrzeug weist ein hydraulisches Stützensystem oder ein Slide-Out-System auf. Vorzugsweise weist das Fahrzeug beide hydraulischen Systeme auf, insbesondere gespeist von einer gemeinsamen Hydraulikeinheit mit Hydraulikpumpe und zentralem Steuergerät. Die Hydraulikpumpe wird vorzugsweise durch einen bürstenlosen Gleichstrommotor angetrieben. Teil des Fahrzeugs bzw. des Hydrauliksystems sind zur Erfassung einer Windsituation geeignete Sensoren, insbesondere mindestens ein Beschleunigungs- und/oder Lagesensor und/oder mindestens ein Lastsensor.

### DAS STEUERGERÄT IST DAFÜR AUSGEBILDET, SENSORDATEN DER SENSOREN AUSZUWERTEN UND IN REAKTION HIERAUF DEN MINDESTENS EINEN HYDRAULIKAKTOR ZU STEUERN, VORZUGSWEISE ENTSPRECHEND DEM OBEN BESCHRIEBENEN BETRIEBSVERFAHREN.KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1A und 1B zeigen ein erfindungsgemäßes Fahrzeug in einer Seitenansicht und einer Frontansicht.
Fig. 2 und 3 zeigen zwei Varianten eines Hydrauliksystems für das Fahrzeug.
Fig. 4A und 4B zeigen eine Ruhestellung des Fahrzeugs.
Fig. 5A bis 5C zeigen das Fahrzeug in einer Windsituation.
Fig. 6 zeigt ein Mobiltelefon, über das der Fahrzeugführer über die Windsituation informiert wird und die Möglichkeit erhält, Sicherungsmaßnahmen am Fahrzeug zu bestätigen bzw. zu verhindern.
Fig. 7 bis 9 zeigen den Ablauf von Sicherungsmaßnahmen am Fahrzeug.
Fig. 10A und 10B verdeutlichen eine abweichende Windsituation.

### DETAILLIERTE BESCHREIBUNG DER AUSFÜHRUNGSBEISPIELE

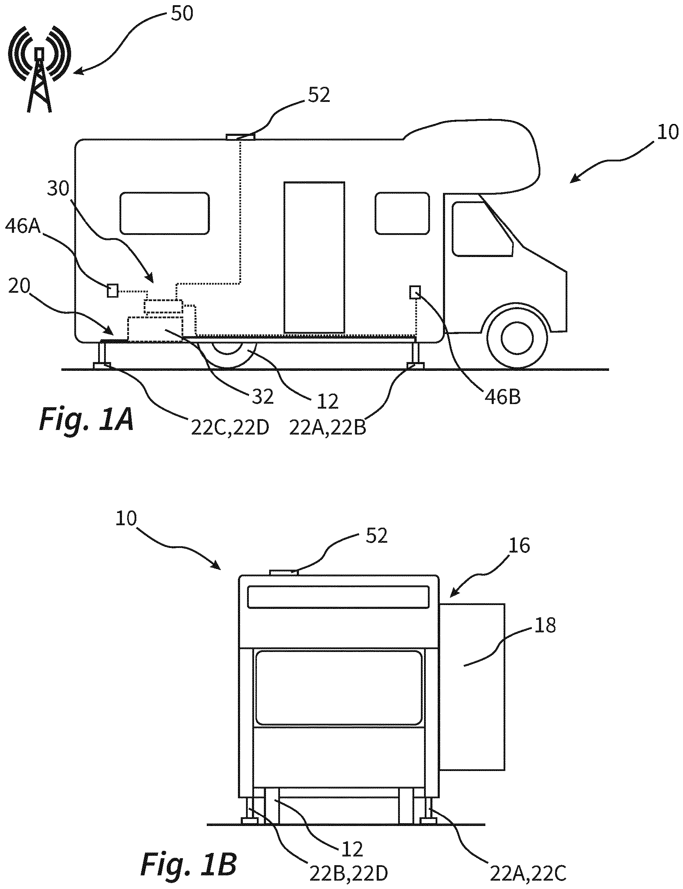

Die Fig. 1A und 1B zeigen ein erfindungsgemäßes Fahrzeug 10, vorliegend in Form eines zweiachsigen Reisemobils. Das Fahrzeug 10 verfügt über ein Stützensystem 20 mit insgesamt vier Bodenstützen 22A bis 22D, die mittels eines Hydrauliksystems 30 ausfahrbar sind. Weiterhin verfügt das Fahrzeug 10 über ein Slide-Out-System 16 mit einem Slide-Out-Kasten 18, der bei stehendem Fahrzeug mittels des Hydrauliksystems 30 ausgefahren werden kann, um den Wohnraum des Reisemobils 10 zu vergrößern.

Das Hydrauliksystem 30 des Fahrzeugs 10 ist dafür ausgebildet, in Reaktion auf eine potenziell kritische Windsituation die Bodenstützen 22A bis 22D in nachfolgend noch erläuterter Art und Weise auszufahren bzw. einzufahren und/oder den Slide-Out-Kasten 18 einzufahren.

Um die Windsituation erfassen zu können, weist das Fahrzeug 10 verschiedene Sensoren auf, von denen in der Fig. 1A Lage- und Beschleunigungssensoren 46A, 46B abgebildetsind. Weitere Sensoren ergeben sich aus den weiteren Figuren. Darüber hinaus ist ein Steuergerät 31 des Hydrauliksystems 30 mit einer Funkantenne 52 verbunden, mittels dessen das Steuergerät 31 auf ein externes Mobilfunknetz 50 zugreifen kann, insbesondere um Wetterdaten zu erfassen oder um hierüber ein Bediengerät, wie ein Smartphone, mit dem Hydrauliksystem 30 zu koppeln.

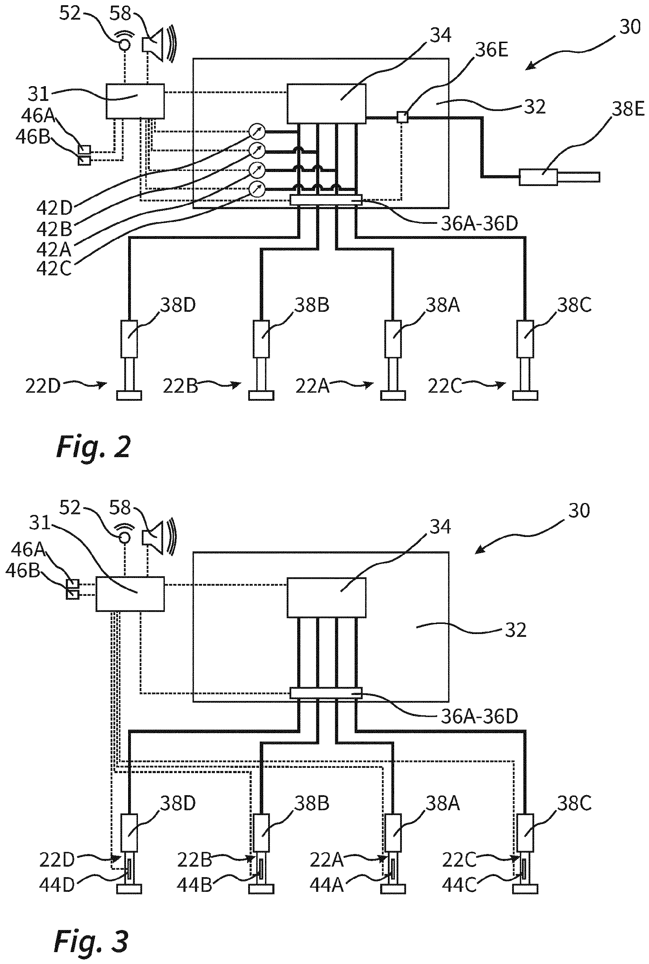

Die Fig. 2 und 3 zeigen mögliche Ausgestaltungen des Hydrauliksystems. Zunächst zur Fig. 2:
Das hier abgebildete Hydrauliksystem 30 verfügt über vier Hydraulikzylinder 38A bis 38D zum Ausfahren und Einfahren der Bodenstützen 22A bis 22D. Die Hydraulikzylinder38A bis 38D sind mit einer Hydraulikzentraleinheit 32 verbunden. Mit dieser Hydraulikzentraleinheit 32 ist weiterhin ein Hydraulikzylinder 38E zum Einfahren und Ausfahren des Slide-Out-Kastens 18 verbunden.

Die Hydraulikzentraleinheit 32 weist eine Hydraulikpumpe 34 auf sowie eine Mehrzahl von Ventilen 36A bis 36E, um mittels der Pumpe 34 geförderte Hydraulikflüssigkeit druckbeaufschlagt den Hydraulikzylindern 38A bis 38E zuführen zu können.

Zur Steuerung des Hydrauliksystems 30 ist das bereits erwähnte Steuergerät 31 vorgesehen. Dieses ist zur Steuerung eines Elektromotors, insbesondere eines bürstenlosen Gleichstrommotors ausgebildet, mittels dessen die Hydraulikpumpe 34 betrieben wird. Darüber hinaus ist das Steuergerät 31 mit den Ventilen 36A bis 36E verbunden, um den Zustrom von Hydraulikflüssigkeit zu den verschiedenen Hydraulikzylindern 38A bis 38E zu steuern.

Das Steuergerät 31 ist weiterhin mit vier Hydraulikdrucksensoren 42A bis 42D verbunden, die im Hydrauliksystem 30 derart angeordnet sind, dass sie den Druck in den Hydraulikzylindern 38A bis 38D erfassen können. Hierfür müssen sie nicht im Bereich der Bodenstützen 22A bis 22D angeordnet sein, sondern können Teil der Hydraulikzentraleinheit 32 sein. Es ist aber auch eine Bauweise möglich, bei der die Hydraulikdrucksensoren unmittelbar an den Hydraulikzylindern vorgesehen sind.

Weiterhin ist das Steuergerät 31 mit den bereits genannten Lage- und Beschleunigungssensoren 46A, 46B verbunden sowie mit der Funkantenne 52. Zusätzlich kann das Steuergerät 31 mit einem Signalgeber 58, insbesondere einem Lautsprecher verbunden sein.

Die genannten Hydraulikdrucksensoren 42A bis 42D gemäß dem Hydrauliksystem 30 der Fig. 2 dienen dem Zweck, die auf die Bodenstützen 22A bis 22D wirkende Last zu erfassen. Bei dem Hydrauliksystem 30 gemäß Fig. 3 ist eine Alternative hierfür vorgesehen, nämlich in Form von Dehnungsmessstreifen 44A bis 44D im Bereich der Bodenstützen 22A bis 22D selbst.

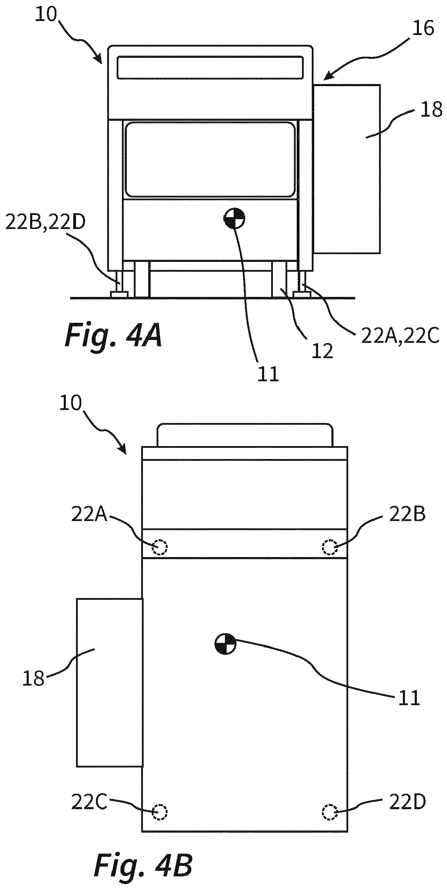

Die Fig. 4A und 4B verdeutlichen zunächst das Aufstellen des Fahrzeugs, beispielsweise auf einem Campingplatz. Beim Aufstellen des Fahrzeugs werden üblicherweise und so auch vorliegend die Bodenstützen 22A bis 22D ausgefahren, um das Fahrzeug zu nivellieren und um einen sicheren Stand des Fahrzeugs 10 zu gewährleisten. Sobald dies geschehen ist, wird der Slide-Out-Kasten 18 ausgefahren. Wie die Fig. 4A und 4B verdeutlichen, ist der Schwerpunkt 11 des Fahrzeugs 10 bezogen auf die Fahrzeugquerrichtung nicht in der Mitte des Fahrzeugs 10 angeordnet. Dies kann sich aus fahrzeugfesten Komponenten wie beispielsweise den vergleichsweisen schweren Gerätschaften in der Küche des Fahrzeugs 10 ergeben. Weiterhin kann es durch den Slide-Out-Kasten 18 sowie eine asymmetrische Verteilung des Gepäcks bedingt sein.

Durch die nicht-zentrische Lage des Schwerpunktes 11 ergibt sich, dass die auf den Bodenstützen 22A bis 22D aufliegende Last nicht einheitlich ist. Im vorliegenden Falle ist die Last auf den bezogen auf die Vorwärtsfahrtrichtung linksseitigen Bodenstützen 22A, 22C höher als auf den rechtsseitigen Bodenstützen 22B, 22D. Weiterhin ist auch die Last auf den vorderen Bodenstützen 22A, 22B höher als auf den hinteren Bodenstützen 22C, 22D.

Nachdem das Fahrzeug 10 abgestellt wurde und in der skizzierten Weise für den Aufenthalt vorbereitet wurde, werden die auf den Bodenstützen 22A bis 22D jeweils wirkenden Lasten temporär im Steuergerät 31 abgespeichert. Zusätzlich oder alternativ kann auch die hieraus errechnete Lage des Schwerpunktes bezogen auf die Fahrzeuglängsachse und die Fahrzeugquerachse, im Steuergerät31 abgespeichert werden. Diese Daten stellen Basisdaten für nachfolgende Auswertungsschritte bzw. Reaktionsschritte des Hydrauliksystems 30 dar.

Natürlich ist nicht gewährleistet, dass zum Zeitpunkt des Aufstellens des Fahrzeugs 10 auf einem Campingplatz Windstille herrscht und die Lasten auf den Bodenstützen 22A bis 22D nicht partiell windbedingtsind. Es kann dahervon Vorteil sein, wenn die genannten Basisdaten zu einem späteren Zeitpunkt nochmals erfasst oder verifiziert werden, insbesondere wenn auf Basis von Sensordaten davon auszugehen ist, dass Windstille oder nahezu Windstille herrscht.

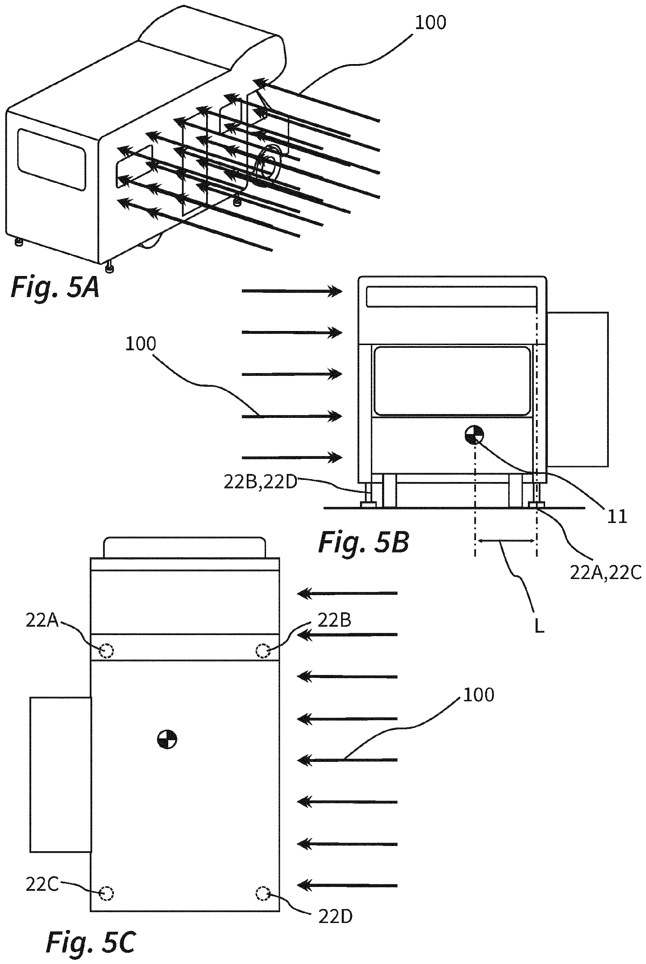

Die Fig. 5A bis 5C verdeutlichen eine auftretende Windsituation. In dieser Windsituation bläst der Wind 100 von links gegen das Fahrzeug. Die linke Seite des Fahrzeugs stellt somit die Luv-Seite dar, während die rechtsseitige Fahrzeugseite die Lee-Seite darstellt. Der Wind 100 bewirkt ein Kippmoment durch eine von den Bodenstützen 22A, 22C definierte Kippachse. Solange die Gewichtskraft des Fahrzeugs ein mindestens ebenso großes gegenläufiges Moment bewirkt, bleibt das Fahrzeug stabil stehen und wird auf seiner Luv-Seite nicht angehoben. Wird der Wind allerdings stark oder treten starke Windböen auf, so besteht diese Gefahr.

Das Steuergerät kann die sich einstellende Windsituation auf verschiedene Arten und Weisen erkennen. Zunächst besteht die Möglichkeit, dass über das externe Netzwerk 50 bezogene Wetterdaten die grundsätzliche Gefahr einer problematischen Windsituation zu erkennen geben. Zudem können die Lage- und Beschleunigungssensoren 46A, 46B herangezogen werden, um eine Windsituation zu erkennen. Eine solche Windsituation, insbesondere eine Windsituation mit kritischen Windböen, lässt sich durch Erschütterungen des Fahrzeugs identifizieren, insbesondere wenn diese Erschütterungen an den Lage- und Beschleunigungssensoren 46A, 46B etwa in gleicher Stärke zu verzeichnen sind. Üblicherweise reicht ein einzelnes Erschütterungsereignis noch nicht aus, um sicher auf eine potenziell problematische Windsituation rückschließen zu können. Das Steuergerät 31 ist vorzugsweise dafür ausgebildet, beim wiederholten Auftreten von Erschütterungsereignissen auf das potenzielle Vorhandensein einer kritischen Windsituation zu schließen.

Beispielsweise können Erschütterungen, die länger als 1 Sekunde andauern und von denen in einem Zeitraum von 10 Minuten mehr als drei Ereignisse stattfinden, als Indikator für eine potenziell problematische Windsituation gewertet werden.

Wird eine solche potenziell problematische Windsituation ermittelt, so wird vorzugsweise über die Lastsensoren 42A bis 42D, 44A bis 44D eine Verifikation vorgenommen. Diese vorzugsweise im Ruhezustand nicht aktivierten Sensoren werden zu diesem Zweck aktiviert und die jeweils anliegende Last wird erfasst. Weicht diese Last an einigen der Bodenstützen 22A bis 22D signifikant von den diesbezüglich zuvor erfassten Basisdaten ab, so ist dies ein recht klarer Indikator für eine problematische Windsituation. Das Steuergerät31 kann vorzugsweise für einen begrenzten Zeitraum von beispielsweise 30 Sekunden bis 120 Sekunden die Sensordaten der Lastsensoren auswerten, um eine Windsituation detailliert zu erfassen.

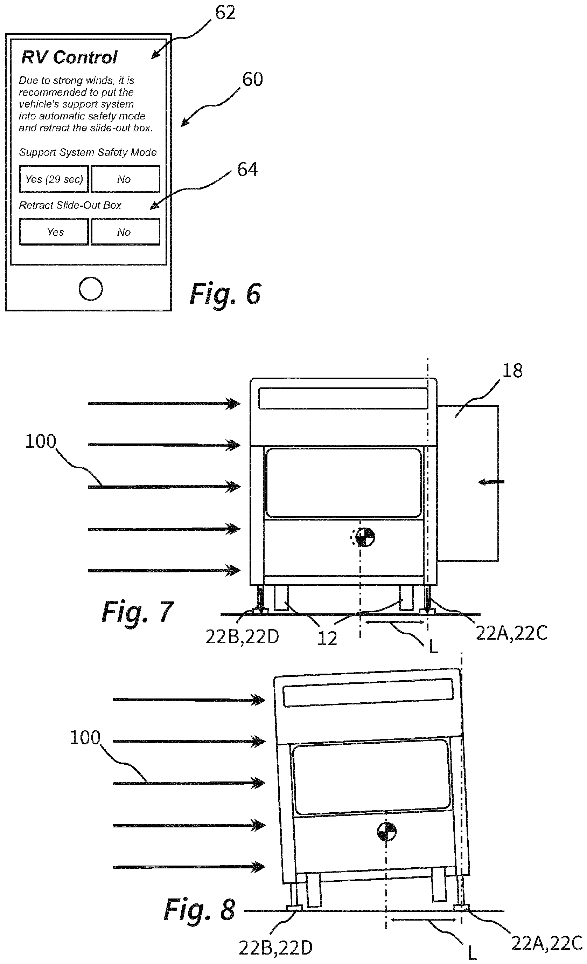

Ist die Windsituation ausreichend problematisch, so reagiert das Steuergerät31 durch angemessene Gegenmaßnahmen. Bevorzugt tut es dies jedoch nicht sofort, sondern ermöglicht einem Bediener, auf die Maßnahmen Einfluss zu nehmen. Fig. 6 zeigt ein Display, insbesondere ein Smartphone 60 mit Display, über das das Steuergerät 31 auf die erkannte Windsituation hinweist und den Bediener entscheiden lässt, ob das Stützensystem 20 in einen Sicherheitsmodus überführt werden soll und/oder ob der Slide-Out-Kasten 18 eingefahren werden soll. Beim vorliegenden Beispiel ist vorgesehen, dass der Slide-Out-Kasten 18 nur bei positiver Bestätigung des Bedieners einfährt. Die Überführung des Stützensystems 20 in den Sicherheitsmodus findet jedoch auch dann statt, wenn der Bediener für 30 Sekunden keinerlei gegenteilige Weisung erteilt.

Fig. 7 zeigt das initiale Vorgehen des Steuergeräts 31, wenn der Bediener den vorgeschlagenen Maßnahmen zugestimmt hat. Zunächst werden alle Bodenstützen 22A bis 22D weiter ausgefahren, so dass die Fahrzeuglast zum überwiegenden Teil vorzugsweise zum weit überwiegenden Teil oder vollständig, auf den Bodenstützten 22A bis 22D ruht. Die Reifen 12 werden angehoben, bis sie den Bodenkontakt verlieren. Hierdurch lässt sich eine erhöhte Stabilität des Fahrzeugs bewirken. Schwankungen des Fahrzeugs im Innenraum werden gemindert.

Gleichzeitig wird der Slide-Out-Kasten 18 eingefahren, wodurch sich der Schwerpunkt 11 des Fahrzeugs bezogen auf Fig. 7 nach links verlagert.

Der Abstand L zwischen der leeseitigen und durch die Bodenstützen 22A, 22C definierten Kippachse und dem Schwerpunkt 11 des Fahrzeugs 10 wird hierdurch erhöht. Damit wird auch das dem windbedingt verursachten Kippmoment entgegenwirkende und durch die Gewichtskraft des Fahrzeugs 10 bewirkte Moment erhöht.

Fig. 8 zeigt eine weitere Maßnahme, die sich unmittelbar anschließen kann oder bei nochmals erhöhter Windgeschwindigkeit oder Böenneigung ergriffen werden kann. Hierbei werden die leeseitigen Bodenstützen 22A, 22C nochmals weiter ausgefahren, so dass das Fahrzeug 10 als Ganzes sich in Richtung des Windes 100 verkippt. Dies bewirkt nochmal eine Erhöhung des Abstandes L zwischen der leeseitigen Kippachse und dem Schwerpunkt 11 des Fahrzeugs.

Die Neigung des Fahrzeugs 10, ausgehend von dem Zustand der Fig. 8 um seine Fahrzeuglängsachse zu kippen, ist nun gravierend gegenüber dem Zustand der Fig. 5A und 5B reduziert.

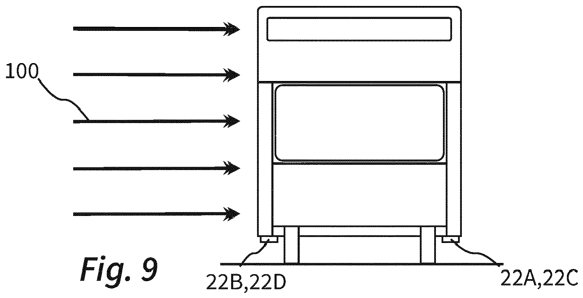

Fig. 9 zeigt eine weitere Maßnahme, die das Steuergerät 31 ergreifen kann und die vorzugsweise ergriffen wird, wenn der Wind so stark oder so böig wird, dass eine Beschädigung des Fahrzeugs 10 zu erwarten ist. Es wurde festgestellt, dass die Gefahrensituation, die sich hieraus ergibt, je nach Situation durch das Einfahren der Bodenstützen 22A bis 22D verringert werden kann. Die Bodenstützen 22A bis 22D werden daher im Zustand der Fig. 9 vollständig eingefahren, so dass das Fahrzeug nunmehrwieder alleine auf seinen Reifen 12 ruht. Vorzugsweise wird gleichzeitig ein Signalton überden Lautsprecher 58 abgegeben, um die im Fahrzeug 10 befindlichen Personen aufzufordern, dieses zu verlassen.

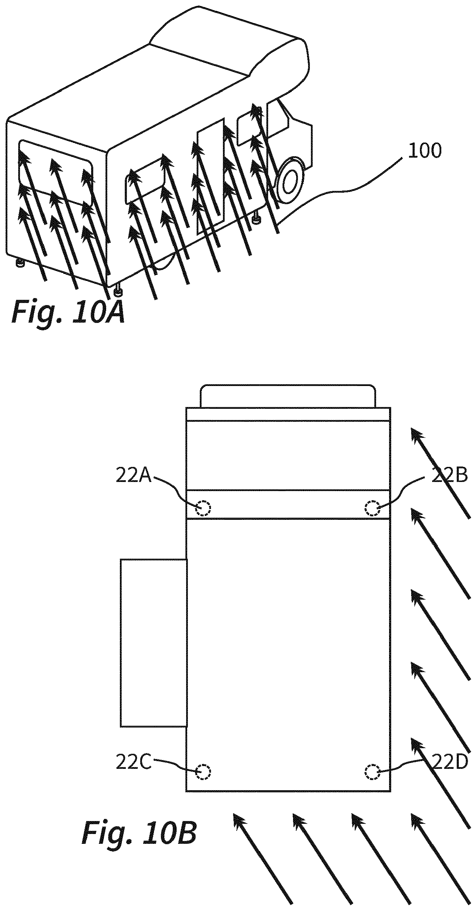

Die Fig. 10A und 10B zeigen eine abweichende Windsituation. Während in den Fig. 5A bis 5C eine Windsituation dargestellt ist, bei der der Wind genau von der Seite kommt, kommt er beim Beispiel der Fig. 10A und 10B von schräg hinten. In Hinblick auf die beschriebenen Maßnahmen muss dies keine Änderung zur Folge haben. Es ist bevorzugt, dass das Steuergerät 31 die in Fahrzeuglängsrichtung weisende Richtungskomponente des Windes ignoriert und lediglich die in Fahrzeugquerrichtung wirkende Komponente berücksichtigt, so dass in der oben beschriebenen Weise die Bodenstützen 22A, 22C bzw. 22B, 22D jeweils gemeinsam eingefahren bzw. ausgefahren werden.

Alternativ ist es jedoch auch möglich, die Bodenstützen 22A-22D auf den beiden Seiten des Fahrzeugs 10 in jeweils unterschiedlichem Maße auszufahren bzw. einzufahren. In der in Fig. 10A und 10B dargestellten Situation könnte es daher sinnvoll sein, die Bodenstützen 22A, 22B vorne links besonders weit auszufahren, während die Bodenstützen 22C, 22D in geringerem Maße ausgefahren werden und die Bodenstütze 22D nicht ausgefahren, nur in geringem Maße ausgefahren oder gar eingefahren wird.

## Patentansprüche

1. Verfahren zur Stabilisierung eines Fahrzeugs (10) in Art eines Reisemobils oder eines Caravans bei Wind mit den folgenden Merkmalen:
a. das Fahrzeug (10) verfügt über ein Stützensystem (20) mit einer Mehrzahl von ausfahrbaren Bodenstützen (22A-22D) und/oder über ein Slide-Out-System (16) mit einem ausfahrbaren Slide-Out-Kasten (18), und
b. das Verfahren sieht vor, dass mittels Sensoren (42A-42D, 44A-44D, 46A, 46B) des Fahrzeugs (10) eine Windsituation erfasst wird, und
c. das Verfahren sieht vor, dass in Reaktion auf die erfasste Windsituation mindestens eine der Bodenstützen (22A-22D) ausgefahren oder eingefahren wird und/oder der Slide-Out-Kasten (18) eingefahren wird.

2. Verfahren nach Anspruch 1 mit den folgenden weiteren Merkmalen:
a. das Fahrzeug (10) verfügt über mindestens einen Beschleunigungs- und/oder Lagesensor (46A, 46B), und
b. zur Erfassung der Windsituation wird der mindestens eine Beschleunigungs- und/oder Lagesensor (46A, 46B) ausgewertet,
vorzugsweise mit mindestens einem der folgenden zusätzlichen Merkmale:
c. das Fahrzeug (10) verfügt über mehrere Beschleunigungs- und/oder Lagesensoren (46A, 46B), die vorzugsweise in Fahrzeuglängsrichtung zueinander beabstandet sind, und/oder
d. der mindestens eine Beschleunigungs- und/oder Lagesensor (46A, 46B) wird ausgewertet und bei Erfassung einer qualifizierten Windsituation wird mindestens ein weiterer Sensor (42A-42D) aktiviert, um die Windsituation zu verifizieren und/oder genauer zu erfassen.

3. Verfahren nach Anspruch 1 oder 2 mit den folgenden weiteren Merkmalen:
a. das Fahrzeug (10) verfügt über mindestens einen Lastsensor (42A-42D, 44A-44D) zur Erfassung einer auf mindestens eine Bodenstütze (22A-22D) wirkenden Kraft, und
b. zur Erfassung der Windsituation wird der mindestens eine Lastsensor (42A-42D, 44A-44D) ausgewertet,
vorzugsweise mit mindestens einem der folgenden zusätzlichen Merkmale:
c. der mindestens eine Lastsensor (42A-42D) wird aus einem deaktivierten in einen aktivierten Zustand überführt, wenn mittels eines anderen Sensors (46A, 46B), insbesondere mittels mindestens eines Beschleunigungs- und/oder Lagesensors (46A, 46B), oder anhand von einem externen Netzwerk (50) bezogenen Wetterdaten eine Windsituation erkannt wurde, und/oder
d. der mindestens eine Lastsensor (44A-44D) ist in Form eines an der Bodenstütze (22A-22D) angebrachten Kraftsensors realisiert, insbesondere in Form eines Dehnungsmessstreifens.

4. Verfahren nach Anspruch 3 mit den folgenden weiteren Merkmalen:
a. das Stützsystem (20) ist als hydraulisches Stützsystem (20) ausgebildet, wobei mindestens einer Bodenstütze (22A-22B) ein Hydraulikzylinder (38A-38E) zum Bewegen der Bodenstütze (22A-22B) zugeordnet ist, und
b. der mindestens eine Lastsensor (44A-44D) ist in Form eines hydraulischen Drucksensors realisiert, der den Druck im Hydraulikzylinder (38A-38D) unmittelbar oder mittelbar erfasst,
vorzugsweise mit dem folgenden zusätzlichen Merkmal:
b. der mindestens eine Lastsensor (44A-44D) wird zum Zwecke der Winderfassung aktiviert, wenn zuvor mittels eines anderen Sensors (46A, 46B) oder aus über ein externes Netzwerk (50) bezogene Wetterdaten eine Windsituation ermittelt worden ist.

5. Verfahren nach einem der vorstehenden Ansprüche mit dem folgenden weiteren Merkmal:
a. in Reaktion auf die erfasste Windsituation werden die Bodenstützen (22A-22D) ausreichend weit ausgefahren, dass Reifen des Fahrzeugs (10) einen Gewichtsanteil von maximal 5% einer Gesamtmasse des Fahrzeugs (10) tragen und vorzugsweise keinen Bodenkontakt mehr aufweisen.

6. Verfahren nach einem der vorstehenden Ansprüche mit den folgenden weiteren Merkmalen:
a. in Reaktion auf die erfasste Windsituation werden die Bodenstützen (22B, 22D) auf einer Luv-Seite des Fahrzeugs (10) eingefahren oder ausgefahren und/oder
b. in Reaktion auf die erfasste Windsituation werden die Bodenstützen (22A, 22C) auf einer Lee-Seite des Fahrzeugs (10) ausgefahren,
vorzugsweise mit mindestens einem der folgenden zusätzlichen Merkmale:
c. das Maß des Einfahrens bzw. Ausfahrens der Bodenstützen (22A-22D) ist abhängig von der erfassten Windsituation, insbesondere von der Windgeschwindigkeit und Windrichtung und/oder von der Lage des Schwerpunktes des Fahrzeugs (10), und/oder
d. das Stützsystem (20) weist mehrere linksseitige Bodenstützen (22A, 22C) und mehrere rechtsseitige Bodenstützen (22B, 22D) auf, wobei die Bodenstützen (22A-22D) auf jeweils einer Seite einheitlich ausgefahren oder eingefahren werden, oder
e. das Stützsystem (20) weist mehrere linksseitige Bodenstützen (22A, 22C) und mehrere rechtsseitige Bodenstützen (22B, 22D) auf, wobei die Bodenstützen (22A-22D) auf jeweils einer Seite in unterschiedlichem Maß ausgefahren oder eingefahren werden.

7. Verfahren nach einem der vorstehenden Ansprüche mit dem folgenden weiteren Merkmal:
a. die Reaktion auf die erfasste Windsituation erfolgt in Abhängigkeit von Basisdaten, die zuvor in einer früheren Basissituation mittels der Bodenstützen (22A, 22B) ermittelt worden ist und/oder von fahrzeugspezifisch hinterlegten Basisdaten,
vorzugsweise mit mindestens einem der folgenden zusätzlichen Merkmale:
b. die Basisdaten umfassen Werte mehrerer Lastsensoren (42A-42D, 44A-44D) zur Erfassung der auf eine Mehrzahl von Bodenstützen (22A-22D) wirkenden Kraft, und/oder
c. die Basisdaten umfassen die Lage des Schwerpunktes (11) in Fahrzeugquerrichtung, Fahrzeuglängsrichtung und/oder Fahrzeughochrichtung.

8. Verfahren nach einem der vorstehenden Ansprüche mit den folgenden weiteren Merkmalen:
a. das Stützsystem (20) ist als hydraulisches Stützsystem (20) ausgebildet, und
b. in Reaktion auf die erfasste Windsituation wird mindestens ein Hydraulikventil geöffnet, so dass ein Hydraulikzylinder (38A-38D) des Stützensystems (20) und/oder des Slide-Out-System mit einem Hydrospeicher zur Aufnahme von Druckstößen verbunden wird.

9. Verfahren nach einem der vorstehenden Ansprüche mit dem folgenden weiteren Merkmal:
a. in Reaktion auf die erfasste Windsituation werden die Bodenstützen (22A-22D) eingefahren, so dass Reifen (12) des Fahrzeugs (10) einen Gewichtsanteil von mindestens 50% einer Gesamtmasse des Fahrzeugs (10) tragen, wobei die Bodenstützen (22A-22D) vorzugsweise keinen Bodenkontakt mehr aufweisen,
vorzugsweise mit dem folgenden zusätzlichen Merkmal:
b. es wird eine Warnmitteilung erzeugt, um Menschen im Fahrzeug (10) zur Evakuierung aufzufordern.

10. Verfahren nach einem der vorstehenden Ansprüche mit den folgenden weiteren Merkmalen:
a. vordem Einfahren oder Ausfahren der Bodenstützen (22A-22D) in Reaktion auf die erfasste Windsituation erfolgt eine Signalisierung (62) und/oder ein Warteschritt, im Rahmen dessen auf eine externe Bestätigung (64) gewartet wird, und/oder
b. vor dem Einfahren des Slide-Out-Kastens (18) in Reaktion auf die erfasste Windsituation erfolgt eine Signalisierung (62) und/oder ein Warteschritt, im Rahmen dessen auf eine externe Bestätigung (64) gewartet wird,
vorzugsweise mit dem folgenden zusätzlichen Merkmal:
c. die Signalisierung (62) erfolgt auf einem Bildschirm des Fahrzeugs, mittels einer Signalleuchte, über einen Lautsprecher und/oder mittels eines tragbaren persönlichen Geräts (60) wie einem Smartphone.

11. Verfahren nach einem der vorstehenden Ansprüche mit den folgenden weiteren Merkmalen:
a. das Erfassen von Sensordaten der Sensoren (42A-42D, 44A-44D, 46A, 46B) sowie die Steuerung des Ausfahrens und Einfahrens der Bodenstützen (22A-22D) und/oder des Einfahrens und Ausfahrens des Slide-Out-Kastens (18) erfolgen mittels eines Steuergeräts (31) des Fahrzeugs (10), und/oder
b. das Fahrzeug (10) verfügt über einen Zugang zu einem externen Netzwerk (50), insbesondere dem Internet, wobei zur Erfassung der Windsituation über das externe Netzwerk bezogene Wetterdaten einbezogen werden, und/oder
c. mindestens ein Sensor (42A-42D) zu Erfassung der Windsituation wird wiederholt in zeitlichen Abständen aktiviert, um die Windsituation zu erfassen, und wird jeweils anschließend wieder deaktiviert.

12. Hydrauliksystem (30) für ein Fahrzeug (10) in Art eines Reisemobils oder eines Caravans mit den folgenden Merkmalen:
a. das Hydrauliksystem (30) weist mindestens eine Hydraulikpumpe (34) sowie mindestens einen Hydraulikaktor (38A-38E) eines Stützensystems (20) und/oder eines Slide-Out-Systems (16) auf, und
b. das Hydrauliksystem (30) verfügt über ein Steuergerät (31) zur Steuerung der Hydraulikpumpe (34), und
c. das Hydrauliksystem (30) verfügt über Sensoren (42A-42D, 44A-44D, 46A, 46B) zur Erfassung einer Windsituation, und
d. das Steuergerät (31) ist dafür ausgebildet, Sensordaten der Sensoren (42A-42D, 44A-44D, 46A, 46B) auszuwerten und in Reaktion hierauf den mindestens einen Hydraulikaktor (38A-38E) zu steuern, vorzugsweise entsprechend einem der Ansprüche 1 bis 11.

13. Hydrauliksystem nach Anspruch 12 mit den folgenden weiteren Merkmalen:
a. die Sensoren umfassen mindestens einen Beschleunigungs- und/oder Lagesensor (46A, 46B), und/oder
b. die Sensoren umfassen mindestens einen Lastsensor, insbesondere mindestens einen hydraulischen Drucksensor (42A-42D) oder mindestens einen an einer Bodenstütze (22A-22D) des Stützsystems (20) vorgesehenen Kraftsensor (44A-44D), und/oder
c. das Hydrauliksystem (30) verfügt mindestens über einen bürstenlosen Gleichstrommotor als Antrieb für die Hydraulikpumpe (34).

14. Fahrzeug (10) in Art eines Reisemobils oder eines Caravans mit einem der folgenden Merkmale:
a. das Fahrzeug (10) weist ein Stützensystem (20) und/oder ein Slide-Out-System (16) auf, und
b. das Fahrzeug (10) weist ein Hydrauliksystem (30) nach einem der Ansprüche 12 oder 13 auf.

15. Fahrzeug (10) nach Anspruch 14 mit den folgenden weiteren Merkmalen:
a. das Stützensystem (20) weist mindestens vier Bodenstützen (22A-22D) auf, denen vorzugsweise jeweils ein Lastsensor (42A-42D, 44A-44D) zugeordnet ist, und/oder
b. das Fahrzeug ist als Caravan-Anhänger ausgebildet, oder
c. das Fahrzeug ist als motorisiertes Reisemobil ausgebildet, vorzugsweise als zweiachsiges oder dreiachsiges Reisemobil.
